# EUROPEAN PATENT APPLICATION

(11) **EP 3 043 331 A2**
(43) Date of publication of application: **13.07.2016**
(21) Application number: 16150094.7
(22) Date of filing: 04.01.2016
(51) Int. Cl.: G08G 5/00, G08G 5/02, G08G 5/04, G08G 5/06

(54) **AIRPORT SURFACE MONITORING SYSTEM WITH WIRELESS NETWORK INTERFACE TO AIRCRAFT SURFACE NAVIGATION SYSTEM**

(30) Priority: 06.01.2015 US 201514590754
(71) Applicant: Honeywell International Inc., Morris Plains, NJ 07950 (US)
(72) Inventor: SURACE, Lawrence J., Morris Plains, NJ New Jersey 07950 (US)
(74) Representative: Houghton, Mark Phillip

(57) **Abstract**

This disclosure is directed tomethods, computer program products, and systems for providing airport surface vehicle tracking data, including indications of potential collision hazards, to an airport map display system onboard an aircraft. In one example, a method includes receiving data from one or more airport ground surface sensors configured to detect transient surface objects on an airport ground surface. The method further includes generating informationaboutone or more transient surface objects on an airport ground surface based at least in part on the data from the one or more airport ground surface sensors. The method further includes outputting the informationaboutthe one or more transient surface objects to a wireless router for transmission over a wireless local area network.

## Description

This disclosure relates to aviation systems.

### BACKGROUND

As commercial aviation traffic has continued to increase over the years, airports have grown increasingly busy. Airport trafficway collision avoidance systems may helpprevent potential ground collisions of an aircraft with another aircraft or ground vehicle (incursions) on a runway, taxiway, or gate area. The systems may also help prevent an aircraft from taking an improper route during takeoff, landing, or taxiing (excursions).An increasing amount of air traffic has also involved very large airliners with very long wingspans, which may sometimes reduce wingtip clearance margins while the aircraft is in motion on airport ground surfaces.

### SUMMARY

This disclosure is directed to methods, systems, and computer program products for providing airport surface vehicle tracking data, including indications of potential collision hazards, to an airport map display system onboard an aircraft.An airport surface vehicle tracking system may transmit airport surface transient object data to an aircraft flight crew's electronic flight bag (EFB), such as to an airport moving map display application executing on the EFB, over a wireless network (e.g., extended range Wi-Fi), while the pilot is controlling the aircrafton the airport ground surface (e.g., taxiing). The airport surface vehicle tracking system may also determine potential collision hazards (e.g., with another aircraft or a ground vehicle) and transmit warnings of the potential collision hazards to the flight crew's EFB. The systems described herein may provide better awareness to the pilot of obstacles near the aircraft, which may help prevent incursions. Implementations of this disclosure may thus provide better awareness for control of ground movement of aircraft on airport taxiways, gate areas, runways,and other ground surfaces, including in weather conditions of limited visibility, without the need for any new hardware or software to be installed in the aircraft itself (and thus, without the need to be certified by relevant aviation authorities), and without requiring cooperative participation by other aircraft.

In one example, a method includesreceiving, by a processing device,datafromone or more airport ground surface sensors configured to detect transient surface objects on an airport ground surface. The method further includes generating, by the processing device, information about one or more transientsurface objectson an airport ground surface based at least in part on the datafrom theone or more airport ground surface sensors. The method further includes outputting the informationaboutthe one or more transient surface objectsto a wireless router for transmission over a wireless local area network.

In another example, a computer program productis configured to cause a computing device to generateairport ground surface navigation outputs based on incoming data for a particular aircraft on an airport ground surface. The computer program product is further configured tocause the computing device to receive position and velocity information for one or more transient surface objectson the airport ground surfaceover awireless local area network. The computer program product is further configured to cause the computing device toadd outputs based on the position and velocity information for the one or more transient surface objectsto the airport ground surface navigation outputs.

In another example, a system includesa processor and a communication module. The processor is configured toreceivedatafromone or more airport ground surface sensors configured to detect transient surface objects on an airport ground surface. The processor is further configured to generate position and velocity information for one or more transientsurface objectson the airport ground surface based at least in part on the datafrom theone or more airport ground surface sensors. The communication module is configured to output the position and velocity information for the one or more transient surface objectsto a wireless router for transmission over a wireless local area network.

The disclosure is also directed to an article of manufacture comprising a computer-readable storage medium. The computer-readable storage medium comprises computer-readable instructions that are executable by a processor. The instructions cause the processor to perform any part of the techniques described herein. The instructions may be, for example, software instructions, such as those used to define a software or computer program. The computer-readable medium may be a computer-readable storage medium such as a storage device (e.g., a disk drive, or an optical drive), memory (e.g., a Flash memory, read only memory (ROM), or random access memory (RAM)) or any other type of volatile or non-volatile memory or storage element that stores instructions (e.g., in the form of a computer program or other executable) to cause a processor to perform the techniques described herein. The computer-readable medium may be a non-transitory storage medium.

The details of one or more examples are set forth in the accompanying drawings and the description below. Other features, objects, and advantages will be apparent from the description and drawings, and from the claims.

### BRIEF DESCRIPTION OF DRAWINGS

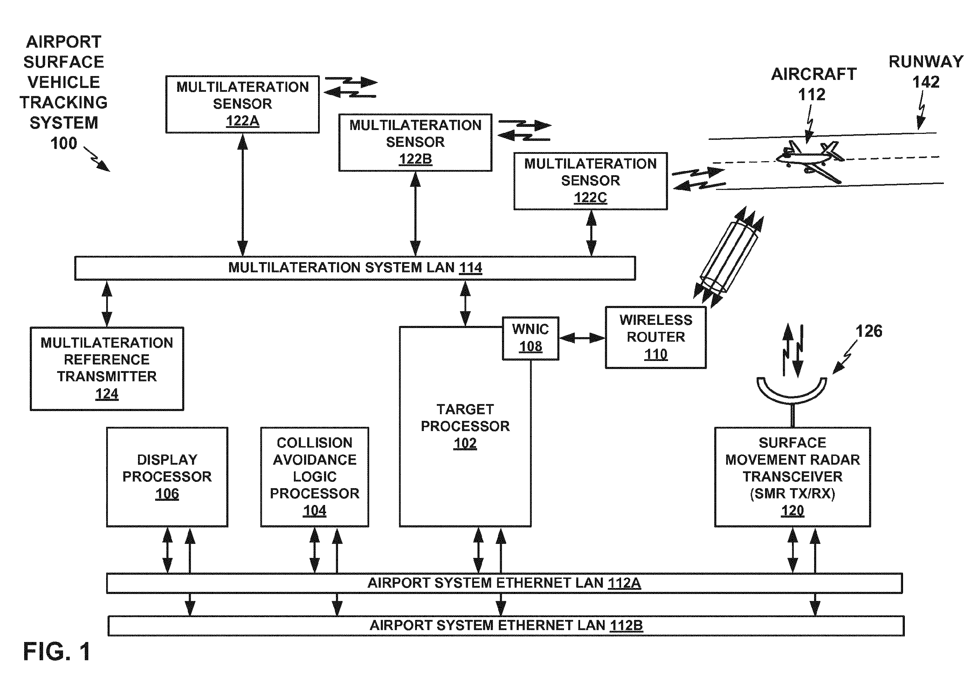

FIG. 1 is a conceptual block diagram depicting an exampleairport surface vehicle tracking system gathering data on the movement of surface vehicles and transmitting the surface vehicle movement data with indications of potential collision hazards to an aircraft on a ground surface of the airport, in accordance with aspects of this disclosure.

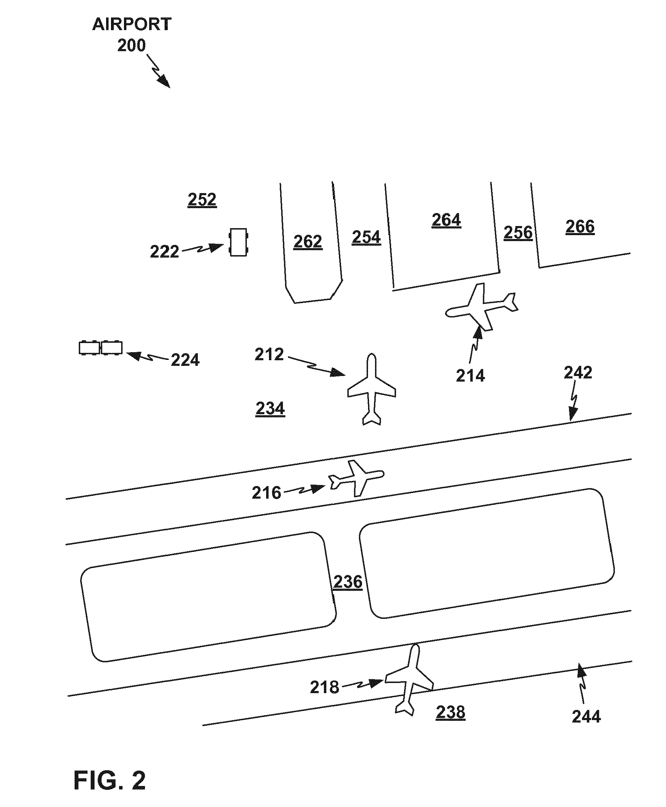

FIG. 2 depicts a conceptual diagram of a portion of an airport with various aircraft and ground vehicles on airport runways, taxiways, and other airport ground surfaces, and an example airport surface vehicle tracking system detecting and processing data on the various aircraft and ground vehicles on the airport ground surfaces, in accordance with aspects of this disclosure.

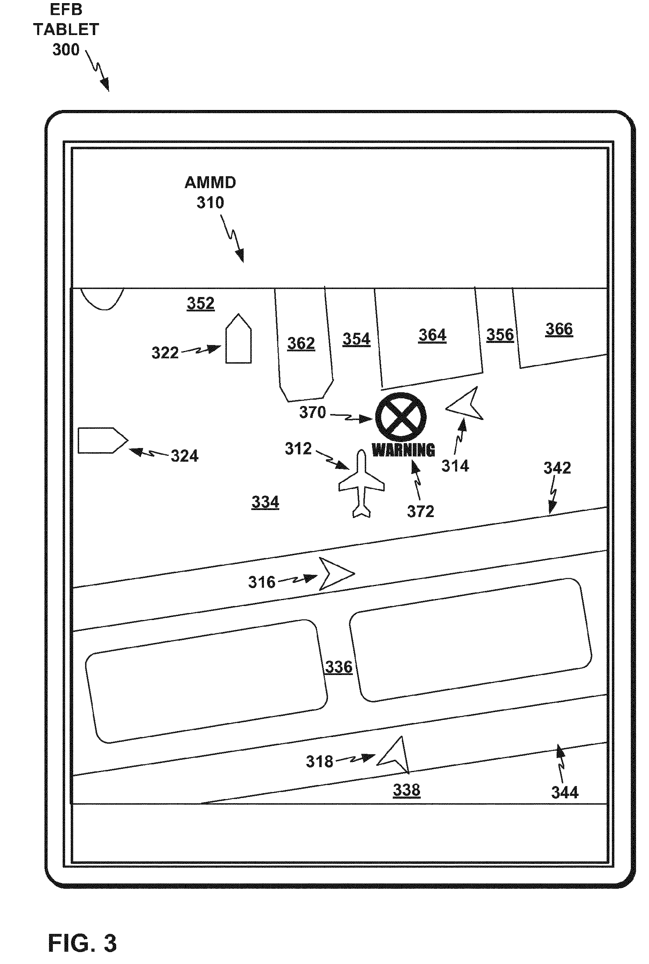

FIG. 3 is a diagram of an example graphical output display of an airport ground surface map that may be implemented by a two-dimensional airport moving map display (2D AMMD) application that may be implemented on an EFB, e.g., on a flight crew'stablet computer in the cockpit of a particular aircrafton a ground surface of the airport, in accordance with aspects of this disclosure.

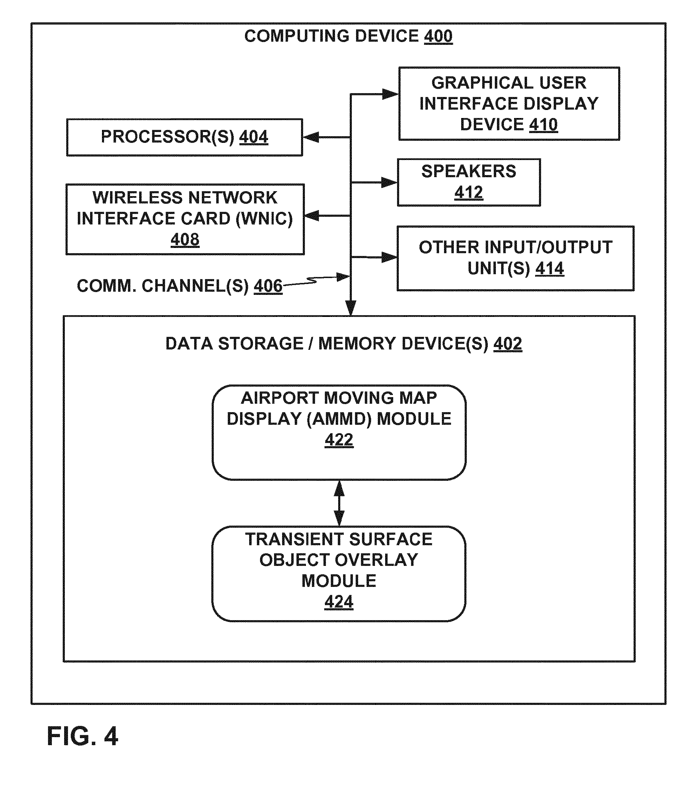

FIG. 4 depicts a conceptual block diagram foran example computing device with an example computer-executable airport moving map display (AMMD) application module and transient surface object overlay application module stored thereon, such that the computing device is configured to execute the AMMD application module and transient surface object overlay application module, in accordance with aspects of this disclosure.

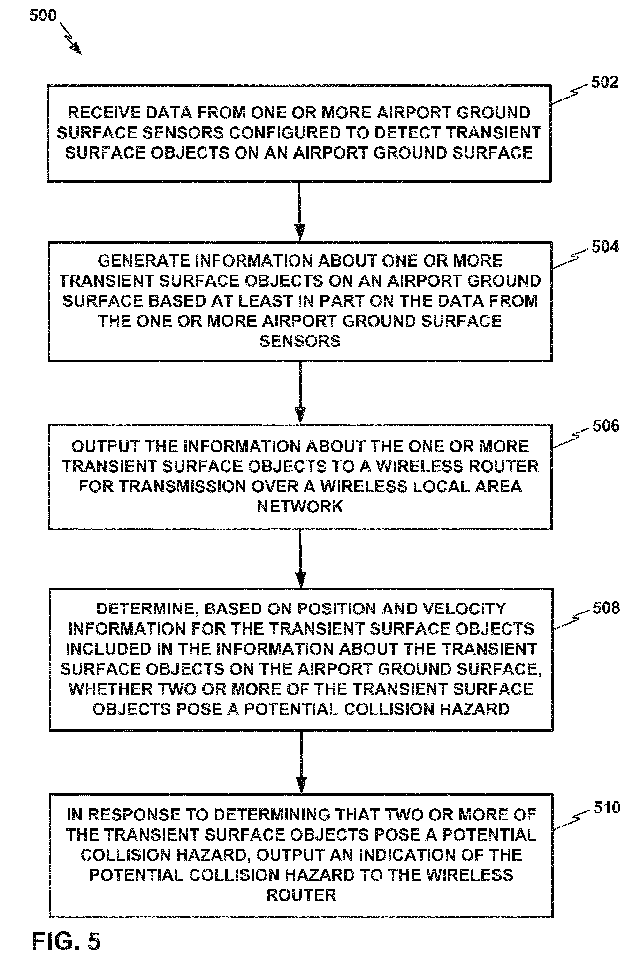

FIG. 5 depicts a flowchart for an example process that an airport surface vehicle tracking system may implement for providing airport surface vehicle tracking data, including indications of potential collision hazards, to an airport map display system generated byan AMMD module andtransient surface object overlay application module executing on an EFB tablet computing device onboard an aircraft on a runway, taxiway, or other airport ground surface, in accordance with aspects of this disclosure.

### DETAILED DESCRIPTION

Various examples are described below generally directed to methods, computer program products, and electronic systems that mayprovide airport surface vehicle tracking data, including indications of potential collision hazards, from an airport surface vehicle tracking system over a wireless network (e.g., extended range Wi-Fi) to an application (e.g., an airport moving map display (AMMD) application) onboard an aircraft, such as on aflight crew'selectronic flight bag (EFB), which may be implemented on a tablet computer or analogous device.The flight crew may view and use the AMMD enhanced with the information from the airport surface vehicle tracking system while the pilot controls the aircraft on the airport ground surface (e.g., taxiing). The airport surface vehicle tracking system may also determine potential collision hazards with one or more other surface vehicles (e.g., other aircraft or ground vehicles) and transmit warnings of the potential collision hazards to the flight crew's EFB. Implementations of this disclosure may thus provide better situational awareness for controllingground movement of aircraft on airport taxiways, including in weather conditions of limited visibility, without the need for any new hardware or software to be installed in the aircraft itself (and thus, without the need to be certified by relevant aviation authorities), and without requiring cooperative participation by other aircraft. Implementations of this disclosure may not only decrease the possibility of collision of an aircraft with anotheraircraft or surface vehicle, but may also provide additional benefits for the airport, e.g., due to smoother taxiing and fewer interruptions or delays due to confusion or lack of situational awareness in the airport ground traffic.

FIG. 1 is a conceptual block diagram depicting an electronic airport surface vehicle tracking system 100 gathering data on the movement of surface vehicles and transmitting the surface vehicle movement data with indications of potential collision hazards to an aircraft 112on a ground surface of the airport, in accordance with an example of this disclosure.The ground surface can be, for example, a taxiway, runway, gate area, apron, or other trafficway or ground surface of an airport. For purposes of this disclosure, description of an "airport" may apply equivalently to an airbase, an airfield, or any other type of permanent or temporary aerodrome.

Airport surface vehicle tracking system 100 may help mitigate or reduce collisions between aircraft 112 (involving body, wingtip, or other portion of aircraft 112) and other aircraft, ground vehicles, or other transient or moving objects on an airport ground surface (collectively, "transient surface objects")whileaircraft 112 is taxiing, taking off, landing, or stationary, on the airport ground surface. For purposes of this disclosure, "transient surface objects" may refer to any aircraft, ground vehicles, or other objects on airport ground surfaces that are not permanently fixed in place, such as buildings or lighting fixtures, and that airport surface vehicle tracking system 100 may track or monitor, when they are temporarily motionless as well as when they are in motion. Airport surface vehicle tracking system 100 may provide outputs, including alerts or warnings, that may be immediately available to inform pilots or other flight crew of a potential hazard of an impending collision, such that the pilot or flight crew can take appropriate action.

In some examples, airport surface vehicle tracking system 100 may be enabled and implemented in existing airport systems and aircraft with only minimal hardware or software changes both for the airport systems and for aircraft systems. In addition, in some examples, airport surface vehicle tracking system 100 maybe configured to provide credible false alarm mitigation as well as the capability to use a variety of data inputs such as Automatic Dependent Surveillance - Broadcast (ADS-B) sources, and provide coverage of any types of vehicles or fixed structures that might pose potential collision hazards for a particular aircraft 112.

In the example shown in FIG. 1, airport surface vehicle tracking system 100 includes a target processor 102, a collision avoidance logic processor 104, a display processor 106, and a wireless network interface card (WNIC) 108 or other type ofcommunication module, allcommunicatively connected by redundant airport systemethernet local area networks (LANs) 116A and 116B ("airport system LANs 116"). WNIC 108 (or any other type ofcommunication module) is connected to an extended range wireless router 110. Airport surface vehicle tracking system 100, and in particular target processor 102, are communicatively connectedto a number of airport ground surface sensors of various types, including a surface movement radar (SMR) transceiver 120 and multilateration sensors 122A, 122B, 122C ("multilateration sensors 122"), as well as to a multilateration reference transmitter 124 viamultilateration system LAN 114. In various examples, target processor 102 may be connected toeither SMR transceiver 120 or multilateration sensors 122 but not both, to additional SMR and/or multilateration sensors, and/or to additional types of airport ground surface sensors.

SMR transceiver 120 is connected to surface movement radar (SMR) antenna 126, which may be disposed proximate to and in range of the runway surfaces, taxiway surfaces, gate areas, apron areas, hangar bays, and other trafficways and airport ground surfaces of the airport. SMR transceiver 120 and SMR antenna 126 may thus be configured to detect, monitor and gather data from these various airport ground surfaces and to detect transient surface objects on the airport ground surfaces, including aircraft, ground vehicles, and any other moving or impermanent objects on the ground surfaces (or "transient surface objects"). Target processor 102 is connected to SMR transceiver 120via airport system LANs 116as described above, and is thus configured to receive data from SMR transceiver 120 and SMR antenna 126, including data on transient surface objects (e.g., various aircraft, ground vehicles, people, windblown debris, stray objects, or any other moving or impermanent objects) on the airport ground surfaces (e.g., runway surfaces, taxiway surfaces, gate areas, apron areas, hangar bays, and other trafficways and airport ground surfaces of the airport).

Multilateration sensors 122 may also be configured to detect, monitor and gather data from various airport ground surfaces and to detect transient surface objects on the airport ground surfaces, in ways that may complement the detection by SMR transceiver 120.In some examples, multilateration sensors 122 may be implemented as omnidirectional antenna sensors stationed at various remote locations around the airport.Multilateration sensors 122 may transmit multilateration signals and detect and measure the time and angle of returning signals. Target processor 102 may gather and process the signals detected by multilateration sensors 122 to evaluate the presence and characteristics of transient surface objects on the airport ground surfaces. Target processor 102 may also receive inputs such as multilateration reference datafrom multilateration reference transmitter 124. Target processor 102 may compare the inputs it receives from multilateration sensors 122 and the inputs it receives from multilateration reference transmitter 124 to help further evaluate the presence and characteristics of transient surface objects on the airport ground surfaces. Target processor 102 may thus generate position and velocity information for transient surface objects based on the multilateration data from multilateration sensors 122 and based on the multilateration reference data from reference transmitter 124.

In some examples of airport surface vehicle tracking system 100, target processor 102 may also be connected to any one or more sensors of a wide variety of other types of sensors configured to detect transient surface objects on the airport ground surfaces.For example, target processor 102 may be communicatively connected to and configured to receive data from one or more microwave sensors, optical imaging sensors, ultrasonic sensors, lidar transceivers, infrared sensors, and/or magnetic sensors.Airport surface vehicle tracking system 100 may incorporate features and/or components of an airport ground surface monitoring system, such as Advanced Surface Movement Guidance and Control System (A-SMGCS) or Airport Surface Detection Equipment-Model X (ASDE-X) System. For example, one or more of the SMR transceiver 120 and SMR antenna 126,multilateration sensors 122, and/or other airport ground surface sensors may be comprised in an Airport Surface Detection Equipment-Model X (ASDE-X) System or an Advanced Surface Movement Guidance and Control System (A-SMGCS).Airport surface vehicle tracking system 100 may incorporate or integrate signals or sensor input from a combination of surface movement radar, multilateration sensors, and satellites.One or more of the types ofairport ground surface sensors may be configured to generate signals indicative of positions of transient ground objects to within a selected accuracy, such as five meters, for example, enabling target processor 102 to generate position and velocity information for the transient ground objects of a similar level of accuracy.Target processor 102 may also be at least at times (at all times or at only certain times) communicatively connected to sensors positioned outside the vicinity of the airport, such as imaging sensors hosted on satellites, airships, or drones with imaging and communication capability.

Target processor 102 is configured to use data from SMR transceiver 120 and/or multilateration sensors 122 and multilateration reference transmitter 124 to evaluate or determine positions and velocities of transient surface objects on the airport ground surfaces, and to generate position and velocity information for one or more transient surface objects on the airport ground surfaces based at least in part on data from the SMR transceiver 120 and/or from the multilateration sensors 122, and/or from one or more other airport ground surface sensors. If target processor 102 is using data from more than one of SMR transceiver 120, multilateration sensors 122, or other airport ground surface sensors, target processor 102 may combine data from these multiple airport ground surface sensors to generate position and velocity information for the one or more transient surface objects on the airport ground surfaces.

For example, target processor 102 may use data from SMR transceiver 120, and/or data frommultilateration sensors 122 (potentially in combination with data from multilateration reference transmitter 124), and/ordata from other airport ground surface sensors to generate positions and velocities at one or more times of one or more aircraft in motion, such as taxiing, taking off, or landing (e.g., aircraft 140 taxiing on runway 130). As another example, target processor 102 may use data from SMR transceiver 120, and/or data frommultilateration sensors 122 (potentially in combination with data from multilateration reference transmitter 124), and/ordata from other airport ground surface sensors to generate positions and velocities at one or more times of one or more airport ground vehicles or other ground support equipment, such as refueler trucks, pushback tugs, airport busses, container loaders, belt loaders, baggage carts, catering vehicles,emergency vehicles, snow removal vehicles, or ground maintenance equipment, for example.

Multilateration sensors 122 may in some examples perform active cooperative interrogation of moving aircraft on the airport ground surfaces. For example, multilateration sensors 122 may transmit interrogation signals via a 1030/1090 megahertz (MHz) Traffic Collision Avoidance System (TCAS) surveillance band. In some examples, multilateration sensors 122 may include Automatic Dependent Surveillance - Broadcast (ADS-B) transceivers (e.g., Mode S ADS-B transceivers) configured to receive ADS-B messages from aircraft on the airport ground surface. Various aircraft in motion on the airport ground surfaces (at least, aircraft that have their ADS-B systems active while on the ground) may automatically transmit ADS-B messages that may be received by multilateration sensors 122. Multilateration sensors 122 using ADS-B may receive the ADS-B messages and communicate the ADS-B messages, potentially with additional data such as time of receipt, to target processor 102, thus facilitating target processor 102 determining and generating position and velocity information for the responding aircraft.

Some types of transient ground objects may not actively transmit messages or signals that may be received by certain types of multilateration sensors or other airport system sensors, or may not respond to certain types of interrogation signals transmitted by multilateration sensors or other airport system sensors, such as if the airport system sensors use cooperative surveillance with which objects other than aircraft are not typically configured to cooperate. Other types of airport ground surface sensors that do not rely on cooperative surveillance techniques may still detect such transient ground objects and communicate data on those transient ground objects to target processor 102. These may include multilateration systems that do not rely on cooperative surveillance techniques, SMR transceiver 120 and SMR antenna 126, microwave sensors, optical imaging sensors, ultrasonic sensors, lidar transceivers, infrared sensors, and/or magnetic sensors configured to detect transient ground objects on the airport ground surfaces.

In some examples, target processor 102 is configured to output the position and velocity information it generates for transient surface objects to wireless network interface card (WNIC) 108 and thus to extended range wireless router 110 for transmission over a wireless local area network, such as an extended range Wi-Fi network. For example, target processor 102 may output position and velocity information for one or more transient ground surface objects at a selected ethernet connection or output port to an Internet Protocol (IP) address, where the selected ethernet connection or output port is connected to the WNIC 108. WNIC 108 may have an IP port coupled to the ethernet connection or connected to the output port such that WNIC 108 receives the outputs from target processor 102. WNIC 108 may respond by providing the position and velocity information for one or more transient ground surface objects to the wireless router 110 to transmit over the Wi-Fi network.

The extended range Wi-Fi network established by wireless router 110 (and potentially additional wireless routers in communicative connection with WNIC 108) may extend its range across the airport, and include all of the taxiways, runways, gate areas, apron areas, hangar bays, and other trafficways in its range. The extended range Wi-Fi network provided by wireless router 110 may thus include all of the aircraft on the airport ground surfaces in its range, and may potentially provide wireless connectivity in the cockpits of all of the aircraft, including to EFBs of the pilots or flight crew of the various aircraft. In some examples, extended range wireless router 110 may be incorporated together with WNIC 108 in a single unit or component.

Thus, in various examples, in electronic airport surface vehicle tracking system 100 including target processor 102 and WNIC 108, target processor 102 is configured to receive data from one or more airport ground surface sensors (e.g., one or both ofSMR transceiver 120 and multilateration sensors 122) configured to detect transient surface objects on an airport ground surface. Target processor 102 is further configured to generate position and velocity information for one or more transient surface objects on the airport ground surface based at least in part on the data from the one or more airport ground surface sensors. WNIC 108 is configured to receive the position and velocity information for the one or more transient surface objects from target processor 102 and to output the position and velocity information for the one or more transient surface objects to wireless router 110 for transmission over a wireless local area network.

In some examples, target processor 102 may also output the position and velocity information for the transient ground surface objects to collision avoidance logic processor 104.Collision avoidance logicprocessor 104 may determine, based on the position and velocity information for transient surface objects on the airport ground surface, generated by target processor 102, whether two or more of the transient surface objects pose a potential collision hazard. For example, collision avoidance logicprocessor 104 may determine an alert envelope around each of one or more of the transient surface objects based at least in part on the position and velocity information for the one or more transient surface objects on the airport ground surface. Collision avoidance logicprocessor 104 may compare the position and velocity information for the transient surface objects, and may compare the alert envelopes around each of the transient surface objects.Collision avoidance logicprocessor 104 may project the alert envelopes around the transient surface objects forward in time from existing readings of the positions and velocities of the transient surface objects, and determine whether the alert envelopes around the two transient surface objects are projected to intersect, which may indicate a potential collision hazard.

Collision avoidance logicprocessor 104 may also incorporate future motion prediction logic together with the existing readings of the positions and velocities of the transient surface objects to project the future positions and/or motions of the transient surface objects. For example, collision avoidance logicprocessor 104 may distinguish what type of object each transient surface object is, and apply customized future motion prediction logic based on the type of object. This distinguishing of the type of transient ground object may be a simple distinction between aircraft, ground vehicles, and other or unknown objects, or may be more fine-grained and incorporate individualized distinguishing of types of aircraft, airlines or ownership of the aircraft, and schedules and gate assignments of individual aircraft, for example.

The future motion logic may be incorporate an expert rules system and/or a machine learning system. In some examples, an expert rules system accessed or incorporated by collision avoidance logicprocessor 104 may incorporate knowledge of general airline gate assignments, specific gate assignments for a particular aircraft or a given flight, and data on assigned taxiing routes between gate areas and runways. A machine learning system or pattern recognition system that may be accessed or incorporated by collision avoidance logicprocessor 104 may incorporate knowledge of the predictable future motions of aircraft, ground vehicles, or other objects based on statistical training of a machine learning or pattern recognition system based on large training data sets of past motions of aircraft, ground vehicles, and other objects as statistically sampled over a specific airport or a representative collection of airports over time. Such a machine learning system or pattern recognition system may also incorporate statistical training of observed motions of aircraft, ground vehicles, and other transient object on airport ground surfaces as correlated with a variety of conditions such as traffic levels, weather and visibility conditions, and time of day, for example. An initially trained machine learning system may be further refined with a large corpus of data of motions of aircraft, ground vehicles, and other transient object on airport ground surfaces in comparison with motions predicted by the machine learning system.

In some examples, collision avoidance logicprocessor 104is configured to determine an initial potential collision hazard candidate between two or more transient surface objects on the airport ground surfaces, and then deconflict the initial potential collision hazard candidate. For example, collision avoidance logicprocessor 104 mayproject alert envelopes around transient surface objects forward in time from existing readings of the positions and velocities of the transient surface objects, and determine whether the alert envelopes around the two transient surface objects are projected to intersect, as described above, as part of determining an initial potential collision hazard candidate between the transient surface objects.Collision avoidance logicprocessor 104 may then deconflict the initial potential collision hazard candidate by determining whether the initial potential collision hazard candidate is a false alarm hazard candidate or a confirmed potential collision hazard.

For example, collision avoidance logicprocessor 104 may initially project from existing position and velocity data that two transient surface objects are heading toward each other and that the alert envelopes around the two objects are due to intersect within a determined period of time, thereby constituting an initial potential collision hazard candidate. Collision avoidance logicprocessor 104 may then apply additional analysis, in response to the initial determination of thepotential collision hazard candidate, to determine that the two objects are not projected to intersect their alert envelopes after all. For example, collision avoidance logicprocessor 104 may apply motion prediction logic specific to the aircraft, ground vehicles, or other transient surface objects, potentially in combination with specific data on the runways or other trafficways, to determine a more complicated and more realistic projection of the future motions of the aircraft, ground vehicles, or other transient surface objects.

In some examples with two aircraft projected on an intercept course based on recent position and velocity data, andthus showing an initial potential collision hazard candidate, collision avoidance logicprocessor 104 may determine that one or both of the aircraft are predicted toimminently make a turn, or accelerate or decelerate, based on its normal projected taxiing along the taxiways or other trafficways of the airport. Collision avoidance logicprocessor 104 may thus refrain from proceeding with transmitting a warning notification that would likely be a false alarm. Collision avoidance logicprocessor 104 may also continue to monitor the two transient surface objects to ensure that the predicted turn or other new motion proceeds as predicted and that the initially projected alert envelope intersection is indeed invalidated by the subsequent movements of the transient surface objects. By deconflicting and reducing or eliminating false alarms, collision avoidance logicprocessor 104 may enhance the usability and operator benefit of information and services provided by airport surface vehicle tracking system 100 to an aircraft system such as an AMMD application executing on an EFB device, and may help promote the alertness of pilots to warnings thatairport surface vehicle tracking system 100 provides after the deconflicting process.

Thus, after the deconflicting process bycollision avoidance logicprocessor 104, collision avoidance logicprocessor 104 may confirm an initial potential collision hazard candidate. In some examples, collision avoidance logicprocessor 104 may initially determine that the initial potential collision hazard candidate qualifies for an alert without a further deconflicting process. Collision avoidance logicprocessor 104 may, in response to determining that two or more of the transient surface objects pose a potential collision hazard (and potentially after deconflicting the potential collision hazard), output an indication of the potential collision hazard to WNIC 108 and via WNIC 108 to wireless router 110. In some examples,collision avoidance logicprocessor 104 may output the results of its safety logic processing to target processor 102 for target processor 102 to output to the wireless network viaWNIC 108 and wireless router 110 together with the outputs of target processor 102. In these examples,collision avoidance logicprocessor 104 may output indications of potential collision hazards to WNIC 108 and wireless router 110 via target processor 102. The outputs generated by target processor 102 may include graphical outputs, and the indication of the potential collision hazard generated by collision avoidance logicprocessor 104may include a graphical depiction or other graphical indication of the potential collision hazard.

In some examples, collision avoidance logicprocessor 104 mayidentify a particular aircraft receiving theposition and velocity information for the transient surface objects over the wireless local area network as one of the transient surface objects that pose thepotential collision hazard, for example, by identifying a call number, tail number, flight number, or some other identifier of a particular aircraft, and identifying that aircraft as one of the transient surface objects involved in a potential collision hazard.Collision avoidance logicprocessor 104 may then output a customized warning indication of the potential collision to that particular aircraft or those particular aircraft, as further described below. If more than one transient surface objects involved in a potential collision hazard are aircraft, then collision avoidance logic processor 104 may identify both (or all) of those aircraft and sendwarning indications to both (or all) of those aircraft. Collision avoidance logicprocessor 104 may also avoid sending warning alerts to aircraft not involved in a potential collision hazard, thus avoiding sending unnecessary distractions to aircraft away from thepotential collision hazard and that do not need to take notice of thepotential collision hazard.

Target processor 102 and/or collision avoidance logicprocessor 104 may communicate their outputs to display processor 106, in some examples, prior to outputting the data to WNIC 108 and wireless router 110 for transmission over a wireless local area network. Display processor 106 may configure the position and velocity information generated by target processor 102 for the one or more transient surface objects to be graphically rendered on a ground navigation application implemented by the aircraft system, prior to airport surface vehicle tracking system 100 outputting the position and velocity information for the one or more transient surface objects to the wireless router for transmission over the wireless local area network. For example, display processor 106 may generate graphical display format data based on the position and velocity information generated by target processor 102 configured compatibly with the graphical outputs of an airport moving map display (AMMD) application, such that an AMMD application may overlay, superimpose, or otherwise integrate the graphical display format data from display processor 106 with existing AMMD graphical display outputs. Airport surface vehicle tracking system 100 may generate its outputs including or in the form of the graphical display format data generated by display processor 106, such that the outputs may be readily configured to be received and graphically rendered by an AMMD application executing on a flight crew's EFB (e.g., on a tablet computer) in the cockpit of an aircraft in motion on the airport ground surfaces, as further described below.

In some examples, collision avoidance logicprocessor 104 and target processor 102 may be incorporated together as an integrated target and collision avoidance logicsubsystem. For example,target processor 102 and collision avoidance logicprocessor 104 may be implemented as separate hardware components mounted together on a single chassis and interconnected with high-speed or high-throughput broadband connection for rapid exchange of data in anintegrated target and collision avoidance logicsubsystem. In some examples of anintegrated target and collision avoidance logicsubsystem, target processor 102 and collision avoidance logicprocessor 104 may be implemented as software objects, processes, subroutines, or other software modules implemented in a single software system executed by the same one or more real or virtual servers or other computing devices. In some examples of anintegrated target and collision avoidance logicsubsystem, target processor 102 and collision avoidance logicprocessor 104 may be implemented as a combination of dedicated hardware processors, e.g., application-specific integrated circuits (ASICs) and software modules executing on general-purpose processors, e.g., central processing units (CPUs). In some examples, display processor 106 may similarly be incorporated in a single processor, electronic system, or software system with an integrated implementation of target processor 102 and collision avoidance logicprocessor 104, in an integrated target, collision avoidance logic, and display processing subsystem.

FIG. 2 depicts a conceptual diagram of a portion ofan airport 200 withvarious aircraft and ground vehicles on airport runways, taxiways, and other airport ground surfaces, andairport surface vehicle tracking system 100 detecting and processing data onthe various aircraft and ground vehicles on the airport ground surfaces.The various aircraft and ground vehicles shown in FIG. 2 include aircraft 212, 214, 216, and 218, and ground vehicles 222 and 224. The airport also includes runways 242 and 244, taxiways 234, 236, and 238, and gate areas 252, 254, and 256 near airport terminal building portions 262, 264, and 266.The airport further includes SMR transceiver 120 and SMR antenna 126 and multilateration sensors 122 as shown in FIG. 1.

As discussed above with respect to FIG. 1, airport surface vehicle tracking system 100 be configured to determine positions and velocities of the various aircraft, ground vehicles, and any other transient surface objects, anddetermine alert envelopes, initial potential collision hazards, and deconflicting based on the positions and velocities of the various aircraft, ground vehicles, and any other transient surface objects. Airport surface vehicle tracking system 100 may thenoutputthe position and velocity information for the one or more transient surface objects and indications of potential collision hazards to wireless router 110 for transmission over a wireless local area network, such that these outputs from airport surface vehicle tracking system 100 may be received by an EFB on at least one of the aircraft 212, 214, 216, 218 among the transient surface objects on the ground surfaces of airport 200, as further described below with reference to FIG. 3.

FIG. 3 is a diagram of an example graphical output display 310 of an airport ground surface map that may be implemented by a two-dimensional airport moving map display (2D AMMD) applicationthat may be implemented on an EFB, e.g., on a flight crew'stablet computer("EFB tablet 300") in the cockpit of a particular aircraft (e.g., aircraft 212 in FIG. 2), e.g., while the aircraft is on the ground and, for example, taxiing or otherwise moving. In other examples, the 2D AMMD application may be implemented on another device, other than or in addition to the EFB tablet 300. In other examples, a graphical output display analogous tographical output display310 may be implemented by a three-dimensional airport moving map display (3D AMMD) application that may be implemented on an EFB or other application package executing on a tablet computer or other type of computing and display device.

The AMMD application graphical output display 310 (or "AMMD 310")includes representations (e.g., graphical icons) of other transient surface vehicles provided by target processor 102 or other subsystem of airport surface vehicle tracking system 100, that may be received and/or decoded by a transient surface object overlay module of an AMMD application executing on EFB tablet 300 that provides AMMD 310. AMMD 310 thus includes a graphical icon of an ownship 312 (e.g., that may correspond to aircraft 112 in FIG. 1 and aircraft 212 in FIG. 2, in the cockpit of which EFB tablet 300 is being used); graphical icons of other moving aircraft 314, 316, and 318 (e.g., corresponding to other aircraft 214, 216, and 218 in FIG. 2); and graphical icons of ground vehicles 322, 324 (e.g., corresponding to ground vehicles 222 and 224 in FIG. 2), in the display example shown in FIG. 3.

Target processor 102 or other subsystem of airport surface vehicle tracking system 100 may configure the icons representing the other aircraft (314, 316, and 318)and the ground vehicles (322, 324) in the chevron-shaped and asymmetrical pentagon-shaped icons, respectively,as shown in FIG. 3,for display by the transient surface object overlay module implemented in rendering AMMD 310,to incorporate velocity vector information or direction of motion information in the icons themselves, by having the icons pointing in the direction of motion (recent and/or projected) of the various aircraft and ground vehicles (and/or other transient surface objects). Airport surface vehicle tracking system 100 also configures the icons representing the other aircraft (314, 316, and 318) in a distinctly different shape than the icon representing the ownship 312, in this example, which may facilitate the user's ease of distinguishing other aircraft from the ownship in AMMD 310.Target processor 102 or other subsystem of airport surface vehicle tracking system 100 may, in other examples, configure the icons representing the transient ground vehicles in other asymmetrical shapes that may provide a pilot or other flight crew an intuitive sense of a velocity vector or direction of motion of each displayed transient surface object from a glance at AMMD 310. In some examples, airport surface vehicle tracking system 100 may provide the transient surface object overlay module implemented in rendering AMMD 310 with other formats for indicating velocity or direction of motion information, such as with a graphical rendering of a velocity vector proximate to or overlaid on each icon representing a transient surface object.

AMMD 310 also includes representations of runways 342 and 344, taxiways 334, 336, and 338, and gate areas 352, 354, and 356 near airport terminal building portions 362, 364, and 366. AMMD 310 may include indications of potential collision hazards provided by airport surface vehicle tracking system 100, such as warning graphic 370 and textual warning notice 372 between ownship icon 312 and aircraft icon 314, based on a potential collision hazard generated and transmitted by airport surface vehicle tracking system 100 (e.g., generated by collision avoidance logicprocessor 104 and outputting by target processor 102 or an integrated target and collision avoidance logic subsystem 102/104 for transmission via WNIC 108 and wireless router 110), in accordance with an illustrative example of this disclosure.

In this example, airport surface vehicle tracking system 100 may connect to an aircraft system of a particular aircraft312 (e.g., the EFB application running on EFB tablet 300)over the extended range Wi-Fi network (via WNIC 108 and wireless router 110), where the particular aircraft may be among the transient surface objects that airport surface vehicle tracking system 100 is monitoring.Target processor 102 may then transmit the position and velocity information for the transient surface objects, potentially including data for graphically rendering representations of the other transient surface objects, over the extended range Wi-Fi network (via WNIC 108 and wireless router 110) to the aircraft system (e.g., the EFB application running onEFB tablet 300) of the particular aircraft 312. Target processor 102 may also transmit warning indications of potential collision hazards to the aircraft system of the particular aircraft 312over the extended range Wi-Fi network. In some examples, airport surface vehicle tracking system 100 may first establish a secure wireless communication channel over the extended range Wi-Fi with the EFB application running on EFB tablet 300, or with another aircraft system on the particular aircraft, and then transmit its information, including the position and velocity information for the one or more transient surface objects, over the secure wireless communication channel.

The EFB application executing or running on EFB tablet 300 may include an airport moving map display (AMMD) application that may display a moving map of the airport, centered on the aircraft (the ownship) as it moves along the traffic ways or other ground surfaces of the airport. The EFB application may also be configured to receive and decode the data from the airport surface vehicle tracking system 100 over the wireless connection with the wireless network via wireless router 110. The EFB application may be configured to modify its airport moving map display to overlay or superimpose graphical renderings of the information from the airport surface vehicle tracking system 100, as received and decoded by the EFB application executing on EFB tablet 300.

The EFB application executing on EFB tablet 300 may apply a standard icon to represent other aircraft in AMMD 310, such as the chevron-shaped icons representing the various other moving aircraft 314, 316, and 318 aircraft in the screen rendering of AMMD 310 shown in FIG. 3. The EFB application executing on EFB tablet 300 may also apply a different standard icon to represent ground vehicles in AMMD 310, such as the pentagonal-shaped icons representing the various ground vehicles 322, 324 in the screen rendering of AMMD 310 shown in FIG. 3. In examples, the EFB application may apply any of a variety of other types of icons to represent aircraft and ground vehicles, and may apply a distinctive color for the icons to help better visually distinguish between the vehicles or types of vehicles (e.g., to distinguish between aircraft and ground vehicles) and/or buildings or other fixed ground structures or other objects or surfaces. In some implementations, the EFB application may incorporate additional information in the icons, such as different sizes or different shapes of icons to represent different class sizes of aircraft, such as one icon for mid-sized airliners, a second icon for small airplanes, a third icon for very large aircraft, and a fourth icon for rotary wing aircraft, for example. The EFB application may also apply still other icons to represent other transient moving objects besides aircraft and ground vehicles. In this way, the graphical characteristics of a displayed icon may indicate aspects of a threat level of the obstacle represented by the icon (e.g., the size of the transient moving object).

The EFB application may be configured to output warning indications of potential collision hazards as provided in the data EFB tablet 300 receives from airport surface vehicle tracking system 100. The EFB application may be configured to output these warning indications in the form of graphical modifications to AMMD 310, such as a red markerbetween the ownship and a transient ground object posing a potential collision hazard (the "potential collision hazard object"), and/or red vectors projecting from the ownship and the potential collision hazard object along the predicted paths of both vehicles, or red alert envelope outlines around both the ownship and the potential collision hazard object. The EFB application on EFB tablet 300 may also render warning indications to AMMD 310 in other colors and/or other graphical forms besides those described above. The EFB application on EFB tablet 300 may also output warning indications to AMMD 310 in other forms, such as text warnings or audio warnings, for example.

In various examples, the EFB application executing on EFB tablet 300 may thus receive all of the information transmitted by airport surface vehicle tracking system 100, and receive all of the benefit ofairport surface vehicle tracking system 100, simply with a software upgrade to an EFB application that implements examples of this disclosure. Thus, in various examples, a pilot or flight crew may gain the benefits of this disclosure without requiring any new hardware (since an EFB application of this disclosure may execute on an EFB tablet computer or other EFB that a flight crewalready has), and without requiring any hardware or software change to the installed equipment of the aircraft itself, and thus without the need to go through a certification process of any new installed aircraft systems. A pilot, flight crew, or aircraft operator may also enjoy the benefits of an implementation of this disclosure without the need to rely on new hardware or software from an original equipment manufacturer (OEM) of installed hardware or software systems installed in the aircraft.

Airport surface vehicle tracking system 100 may also incorporate fixed ground object visualization and warning, and transmit data for fixed ground objects (e.g., buildings, lighting structures) along with the position and velocity information on the transient ground objects to the EFB application running on EFB tablet 300, in some examples. Airport surface vehicle tracking system 100 may use a fixed ground object database specific to the airport, real-time or recent-time imaging or detection, or a combination of the two, to provide the fixed ground object information. In other examples, airport surface vehicle tracking system 100 may first query the EFB application running on EFB tablet 300 or the other aircraft system whether it already uses or has access to a fixed ground object database specific to the airport, and only provide the fixed ground object information along with the transient object information if the EFB application requests it.

FIG. 4 depicts a conceptual block diagram foran example computing device 400with an example computer-executable airport moving map display (AMMD) application module 422 and transient surface object overlay application module 424stored thereon, such that computing device 400is configured to execute AMMD application module 422 andtransient surface object overlay application module 424.When executing AMMD application module 422 andtransient surface object overlay application module 42, device 400 may be a device that provides situational awareness for a pilot or other flight crew in an aircraft moving on the ground at an airport, or otherwise implements specialized functions that facilitate or enable the piloting and operating of an aircraft.

Computing device 400 may be an implementation of EFB tablet 300 as shown in FIG. 3 and discussed above. Computing device 400 may also be implemented as any of a wide variety of tablet computers, laptop computers, phones, EFBs,augmented reality headsets or virtual reality headsets, or other types of computing devices. Computing device 400 may thus be configured to receivesurface vehicle movement data with indications of potential collision hazardsfrom an electronic airport surface movement monitoring system such as airport surface vehicle tracking system 100 shown in FIG. 1 and discussed above.Computing device 400 may also thus be configured togenerate (e.g., render) and present an airport moving map display (AMMD), such as AMMD 310 shown in FIG. 3 and described above, that shows transientsurface vehicles and indications of potential collision hazards, in accordance with illustrative aspects of this disclosure.

Computing device 400 includes one or more data storage and/or memory devices 402, one or more processors 404, one or more communication channels (e.g., bus) 406, a wireless network interface card (WNIC) 408, a graphical user interface display device 410, one or more speakers 412, and one or more other input and/or output units 414 (e.g., one or more hardware buttons, a hardware keyboard, one or more notification lights or other optical output devices separate from graphical user interface display device 410). Data storage and/or memory devices 402 may include one or more flash storage circuits, one or more hard disc drives, one or more random access memory (RAM) circuits, and/or any other type of device for non-volatile and/or volatile data storage or memory. Graphical user interface display device 410 may be a touchscreen or other type of touch-sensitive or gesture-sensitive display device, although device 400 may include a display device that is not a touchscreen in other examples. Computing device 400 may also have more than one display device, each of which may or may not be a touchscreen display. Computing device 400 may also include more than one network interface card and/or other type of communication module, in some examples. Computing device 400 may also include other components or devices not depicted in FIG. 4, and may differ in some details from the depiction in FIG. 4, such as not including any other input and/or output units 414 in some examples.

AMMD module 422 and transient surface object overlay application module 424 may include or be implemented as executable software applications, modules, libraries, objects, subroutines, or any other collections of executable software code and/or data. AMMD module 422 may perform or implement any or all of the functions described above in terms of an AMMD application and an AMMD (e.g., AMMD 310 in FIG. 3), and transient surface object overlay application module 424 may perform or implement any or all of the functions described above in terms of an EFB application receiving data from airport surface vehicle tracking system 100 and providing data and/or graphical rendering to represent or indicate transient surface objects and/or potential collision hazards or warnings or indications of potential collision hazards in an AMMD.

In some examples, a user may install a transient surface object overlay computer program product on a computing device 400 device that previously had AMMD module 422 stored thereon, such that the transient surface object overlay computer program product configures or installs transient surface object overlay application module 424 to work cooperatively with AMMD module 422 and to provide data to AMMD module 422. In some examples, a user may install an AMMD computer program product with an integrated transient surface object overlay function on a computing device 400 device, such that the AMMD computer program product with integrated transient surface object overlay function installs both AMMD module 422 and transient surface object overlay application module 424 together on computing device 400. In various examples, a user may install an AMMD transient surface object overlaycomputer program product as a wireless download or through a wired connection such as a Universal Serial Bus (USB) connection, a dock connection, or a computer bus connection, for example.

WNIC 408 of computing device 400 may be configured to connect to a Wi-Fi or other wireless network connection established by extended range wireless router 110 of airport surface vehicle tracking system 100, while the aircraft is in range ofwireless router 110, typically when the aircraft is on a runway, taxiway, or other airport ground surface. WNIC 408 may thus be configured to receive data transmitted by airport surface vehicle tracking system 100, e.g., data from target processor 102 of FIG. 1, or from a target, safety logic, and display subsystem that includes target processor 102, collision avoidance logicprocessor 104, and display processor 106 of FIG. 1. AMMD module 422 may be configured to cause computing device 400 to generate airport ground surface navigation outputs based on incoming data for a particular aircraft on an airport ground surface, where the particular aircraft's pilot or flight crew is running an EFB application with the AMMD application of AMMD module 422 on computing device 400. Transient surface object overlay application module 424 may be configured to cause computing device 400 to receive position and velocity information for one or more transient surface objects on the airport ground surface over the wireless local area network from wireless router 110.

Transient surface object overlay application module 424 may further be configured to cause computing device 400 to add or overlay outputs based on the position and velocity information for the one or more transient surface objects to the airport ground surface navigation outputs generated by AMMD module 422. Transient surface object overlay application module 424 may be configured to cause computing device 400 to graphically render visual representations in the AMMD based on the position and velocity information for the one or more transient surface objects. Transient surface object overlay application module 424 may further be configured to cause computing device 400 to receive a customized warning indication of a potential collision with a particular one of the transient surface objects on the airport ground surface, andadd an output based on the customized warning indication of the potential collision to the airport ground surface navigation outputs, such as described above.

FIG. 5 depicts a flowchart for an example process 500 that airport surface vehicle tracking system 100 may implement for providing airport surface vehicle tracking data, including indications of potential collision hazards, to an airport map display system such as AMMD 310 of FIG. 3 generated by AMMD module 422 andtransient surface object overlay application module 424 executing on an EFB tablet computing device 300/400 as in FIGS. 3 and/or 4 onboard an aircraft on a runway, taxiway, or other airport ground surface, in accordance with illustrative aspects of this disclosure. Process 500 may include some features that may beoptional in some examples. In this example, process 500 includes receiving (e.g., by target processor 102 ofairport surface vehicle tracking system 100)datafromone or more airport ground surface sensors (e.g., SMRtransceiver 120, multilateration sensors 122, or both, and/or other sensors) configured to detect transient surface objects on an airport ground surface (502). Process 500 further includes generating (e.g., by target processor 102) information about one or more transientsurface objectson an airport ground surface based at least in part on the datafrom theone or more airport ground surface sensors (504). Process 500 further includes outputting (e.g., by target processor 102 via WNIC 108or other communication module) the information about the one or more transient surface objectsto a wireless router (e.g.,wireless router 110) for transmission over a wireless local area network (e.g., an extended range Wi-Fi network that may provide coverage throughout the ground surfaces of the airport)(506).

In some examples, process 500 may be concluded after outputting the informationaboutthe transient surface objects. In some other examples, process 500 may further include determining (e.g., by collision avoidance logicprocessor 104 or by an integrated target and safety logic subsystem), based on position and velocity information included in the information about the one or more transientsurface objectson the airport ground surface, whether two or more of thetransient surface objects pose a potential collision hazard(508). Process 500 may further include,in response to determining that two or more of thetransient surface objects pose a potential collision hazard, outputting (e.g., by collision avoidance logicprocessor 104 or by an integrated target and safety logic subsystem, via WNIC 108 or other communication module) an indication of the potential collision hazard to the wireless router (e.g.,wireless router 110) (510).

Any of a wide variety of processing devices, such as target processor 102,collision avoidance logic processor 104, display processor 106, other components of airport surface vehicle tracking system 100, or other central processing units, ASICs, graphical processing units, computing devices, or processing devices of any other type may perform process 500 or portions or aspects thereof. A target processor 102, collision avoidance logicprocessor 104, display processor 106, and/or other components of airport surface vehicle tracking system 100 as disclosed above may be implemented in any of a variety oftypes of circuit elements. For example, processors or other components of airport surface vehicle tracking system 100 may be implemented asone or more ASICs, as a magnetic nonvolatile random-access memory (RAM) or other types of memory, a mixed-signal integrated circuit, a central processing unit (CPU), a field programmable gate array (FPGA), a microcontroller, a programmable logic controller (PLC), a system on a chip (SoC), a subsection of any of the above, an interconnected or distributed combination of any of the above, or any other type of component or one or more components capable of being configured to generate position and velocity information for one or more transient surface objects on an airport ground surface based data from airport ground surface sensors and perform other functions in accordance with any of the examples disclosed herein.

Functions executed by electronics associated with the devices systems described hereinmay be implemented, at least in part, by hardware, software, firmware, or any combination thereof. For example, various aspects of the techniques may be implemented within one or more processors, including one or more microprocessors, DSPs, ASICs, FPGAs, or any other equivalent integrated or discrete logic circuitry, as well as any combinations of such components, embodied in electronics included in components of system 100 or other systems described herein. The terms "processor," "processing device," or "processing circuitry" may generally refer to any of the foregoing logic circuitry, alone or in combination with other logic circuitry, or any other equivalent circuitry.

Such hardware, software, firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

When implemented in software, functionality ascribed to the devices and systems described herein may be embodied as instructions on a computer-readable medium such as random access memory (RAM), read-only memory (ROM), non-volatile random access memory (NVRAM), electrically erasable programmable read-only memory (EEPROM), FLASH memory, magnetic data storage media, optical data storage media, or the like. The instructions may be executed to support one or more aspects of the functionality described in this disclosure. The computer-readable medium may be non-transitory.

Any of the described units, modules or components may be implemented together or separately as discrete but interoperable logic devices. Depiction of different features as separate processors, modules, or units is intended to highlight different functions and does not necessarily imply that such processors, modules, or units must be realized by separate hardware or software components. Rather, functionality associated with one or more modules or units may be performed by separate hardware or software components, or integrated within common or separate hardware or software components.

Various aspects of the disclosure have been described. These and other aspects are within the scope of the following claims.

## Claims

1. A method comprising:
receiving (502), by a processing device (102),datafromone or more airport ground surface sensors (122A, 122B, 122C, 120, 126) configured to detect transient surface objects (212, 214, 216, 218, 222, 224) on an airport ground surface (252, 234, 236, 238);
generating (504), by the processing device, information (310, 314, 316, 318, 322, 324) about one or more of thetransientsurface objectson the airport ground surface based at least in part on the datafrom theone or more airport ground surface sensors; and
outputting (506) the informationaboutthe one or more transient surface objectsto a wireless router (110) for transmission over a wireless local area network.

2. The method of claim 1, whereingenerating the informationaboutthe one or more transientsurface objects comprises generating position and velocity information for the one or more transientsurface objects, the method further comprising:
determining (508), based on the position and velocity information for the one or more transientsurface objectson the airport ground surface, whether two or more of thetransient surface objects pose a potential collision hazard; and
in response to determining that two or more of thetransient surface objects pose a potential collision hazard, outputting (510) an indication of the potential collision hazard (314, 370, 372) to the wireless router.

3. The method of claim 2, wherein determining, based on the position and velocity information for the one or more transientsurface objectson the airport ground surface, whether two or more of thetransient surface objects pose a potential collision hazard further comprises:
comparing the position and velocity information for the two or more of thetransient surface objects;
determining an alert envelope around each of one or more of the transientsurface objects based at least in part on the position and velocity information for the one or more transientsurface objectson the airport ground surface;
determining an initial potential collision hazardcandidate between the two or more of thetransient surface objects; and
determining whether the initial potential collision hazardcandidate is a false alarm hazardcandidate or a confirmedpotential collision hazard.

4. The method of claim 2, further comprising:
identifying a particular aircraft receiving theposition and velocity information for the one or more transient surface objects over the wireless local area network as one of the transient surface objects that pose the potential collision hazard; and
outputting a warning indication of the potential collisionhazard to the particular aircraft.

5. The method of claim 1, wherein receiving the datafromthe one or more airport ground surface sensors comprises receiving multilateration data from two or more multilateration sensors in a vicinity of the airport, wherein the method further comprises:
receiving, by the processing device, multilateration reference data from a reference transmitter, and
wherein generating the informationaboutthe one or more transient surface objectson the airport ground surface based at least in part on the datafrom theone or more airport ground surface sensors comprises:
generating, by the processing device, the informationaboutthe one or more transientsurface objects based on the multilateration data from the two or more multilateration sensors and based on the multilateration reference data from the reference transmitter.

6. The method of claim 1, further comprising:
configuring the informationaboutthe one or more transientsurface objectsto be graphically rendered on a ground navigation application (422) implemented by an aircraft system (300, 400), prior to outputting the informationaboutthe one or more transient surface objectsto the wireless router for transmission over the wireless local area network,
wherein configuring the informationaboutthe one or more transient surface objects to be graphically rendered on the ground navigation application implemented by the aircraft system comprises configuring position and velocity information for the one or more transient surface objects to be graphically rendered (424) on an airport moving map display application (422) executed on an electronic flight bag (EFB) (300, 400).

7. A system comprising:
a processor (102) configured toreceivedatafromone or more airport ground surface sensors (122A, 122B, 122C, 120, 126) configured to detect transient surface objects (212, 214, 216, 218, 222, 224) on an airport ground surface (252, 234, 236, 238), theprocessor further being configured to generate position and velocity information for one or more transientsurface objectson the airport ground surface based at least in part on the datafrom theone or more airport ground surface sensors; and
a communication module (108) configured to output the position and velocity information for the one or more transient surface objectsto a wireless router (110) for transmission over a wireless local area network.

8. The system of claim 7, wherein the processor is further configured to determine, based on the position and velocity information for the one or more transientsurface objectson the airport ground surface, whether two or more of thetransient surface objects pose a potential collision hazard; and in response to determining that two or more of thetransient surface objects pose a potential collision hazard, output an indication of the potential collision hazard via the communication module.

9. The system of claim 8, wherein theprocessor is further configured to:
determine an alert envelope around each of one or more of the transientsurface objects based at least in part on the position and velocity information for the one or more transientsurface objectson the airport ground surface;
compare the position and velocity information for the two or more of thetransient surface objects;
compare projections of the alert envelopes around each of the two or more transient surface objects based on projections of theposition and velocity information for the two or more transient surface objects;
determine, based on the comparing of the projections of the alert envelopes, that the two or more transient surface objects pose an initial potential collision hazardcandidate;
perform a deconflicting process to determine whether the initial potential collision hazardcandidate is a false alarm hazardcandidate or a confirmedpotential collision hazard;
identify a particular aircraft receiving theposition and velocity information for the one or more transient surface objects over the wireless local area network as one of the transient surface objects that pose theconfirmedpotential collision hazard; and
output a warning indication of the potential collisionhazard to the particular aircraft.

10. The system of claim 7, wherein theprocessor is further configured to:
configure the position and velocity information for the one or more transientsurface objectsto be graphically rendered on a ground navigation application implemented by an airport moving map display application executed on an electronic flight bag (EFB), prior to outputting the position and velocity information for the one or more transient surface objectsto the wireless router for transmission over the wireless local area network.
